# EUROPEAN PATENT SPECIFICATION

(11) **EP 0 533 822 B1**
(45) Date of publication and mention of the grant of the patent: **21.01.1998**
(21) Application number: 91912107.9
(22) Date of filing: 23.05.1991
(51) Int. Cl.: H02H 7/20

(54) **LOW IMPEDANCE POWER CONDITIONER APPARATUS**
LEISTUNGSKONDITIONIERVORRICHTUNG MIT NIEDRIGER IMPEDANZ
APPAREIL DE CONDITIONNEMENT DE COURANT A FAIBLE IMPEDANCE

(30) Priority: 14.06.1990 US 537579
(43) Date of publication of application: 31.03.1993
(73) Proprietor: TEAL ELECTRONICS CORPORATION, San Diego, California 92121 (US)
(72) Inventor: CARPENTER, William, D., Del Mar, CA 92014 (US); REDDING, Randy, J., San Diego, CA 92115 (US); MCLOUGHLIN, Robert, C., San Diego, CA 92107 (US)
(74) Representative: Beetz & Partner Patentanwälte
(86) International application number: PCT/US91/03677
(87) International publication number: WO 91/20116

(56) References cited:
- EP-A- 0 151 729
- US-A- 3 793 559
- US-A- 3 857 068
- US-A- 3 858 130
- US-A- 4 053 778
- US-A- 4 481 553
- US-A- 4 540 930
- US-A- 4 653 082
- US-A- 4 737 878
- US-A- 4 856 036
- US-A- 4 868 462
- US-A- 4 901 182
- US-A- 4 933 799
- M.G. SAY "Alternating Current Machines", 1983, Pitman Publishing Limited, London (GB), pages 136-141

## Description

This invention relates generally to electrical power conditioners and more particularly to a low impedance power conditioner designed to provide high purity electrical power.

High purity of electrical power generally means that the power is free from both voltage spikes and sags with zero neutral-ground voltage. A number of electronic devices require such high purity power. Among them, in particular, are medical imaging systems such as X-ray, computerized tomography, magnetic resonance imaging, and radiation treatment systems. All of these systems require a large amount of current but only for a short time period when the X-ray or magnetic generator is operational. For good image quality the power during this exposure must be clean. Additionally, the stand-by power between exposures must also be clean for a reliable operation of the computerized control and image processing subsystems which operate between exposures. Details of the requirements may be seen from a General Electric Technical Publication 'Direction 46-019668' of 1992 on 'Advantx System Facility Power and Ground Requirements'.

For these types of systems, it is also very important that the voltage drop during exposure be minimal, typically less than eight percent. This includes the impedance of all upstream wiring, connections and transformers. The reason is that the exposure duration is calculated on the line voltage present immediately before exposure. Significant changes during exposure could result in unpredictable dosages. It is also important that operation of the generator does not create voltage sags or spikes which interfere with the reliable operation of other system components.

The National Electric Code (NEC) requires that circuit breakers feeding the circuit powering an X-ray system be sized for at least fifty percent of the maximum current draw of the system. This forces the use of larger building wiring which achieves lower impedance and reduces the possibility that the breaker could fuse closed.

To satisfy the requirements of the electronic equipment mentioned above various methods have been employed. The most common method to power these systems is to run large size, dedicated wiring from the building service entrance. In an effort to minimize neutral-ground voltages, this wiring often has a full-size neutral and ground. Since this is a computer-type load, it is possible that there could be requirements to oversize the neutral compared with phase conductors. There is little effective isolation from the rest of the building and the power quality that results is low.

Another way to achieve the desired power quality is to use surge suppression devices of L-C filters, or both, on the building wiring near the load. These devices shunt impulses above certain voltage or frequency levels from one wire to another. They typically comprise metal oxide varistors (MOV's), silicon avalanche diodes, gas discharge tubes, capacitors and inductors, and they often incorporate resistors.

There are several limitations with these types of devices. One is that their effects are limited since they can only protect to a certain voltage or frequency level. MOV's and avalanche diodes wear out with time and lose their effectiveness. To the degree that these devices and filters shunt away voltage spikes or dips (normal mode noise), they dump them onto the neutral conductor, creating neutral-ground potentials (common mode noise) which are even more damaging or disruptive than normal mode noise.

To be effective, the inductance between the power line and the shunt elements (surge suppressors and capacitors in L-C filters) must be minimized. Each foot of wire length connecting the suppressors to the conductors makes a measurable difference in their effectiveness. Often these devices are connected to the power lines by wires which are 1.5 to 15.2 meters in length due to physical placement constraints in the field or limited knowledge on the part of the installers, or both.

Another alternative solution is to use a conventional shielded isolation transformer. The transformer allows a new neutral to be derived on its load side, which means that the input ground can be reduced in size to code minimums, and no input neutral needs to be run at all to the transformer. The shield in the transformer increases the isolation of the output from the conducted ground (common mode) noise The fresh neutral-ground bond converts common mode noise to normal mode noise and allows a more effective use of filters and surge suppressors on the transformer secondary. A disadvantage of conventional transformers is that the added impedance of the transformer means that input wiring needs to be increased in size so that total impedance to the load would still be low enough. For that reason, as well as the NEC limitation on the minimum size for main breakers, this isolation transformer needs to be sized for at least fifty percent of the momentary load. and typically seventy to hundred percent. That means it sits idling at about ten percent or less of its rated power, wasting money and space and generating objectionable heat and noise which prevent it from being located near the electronic equipment which it powers.

The extra impedance of the shielded isolation transformer also results in lower power quality when it interacts with computer loads. Modern computers have switch mode power supplies which draw their current in short bursts where the change in current with respect to time (dI/dt) is fast, being equivalent to 1 KHz instead of the ususal 60 Hz for most conventional loads. Even at low load factors, conventional transformers have outputs with a flat-topped voltage waveform and have voltage spikes. Worse, when one of the many system loads switches on or off, an even higher effective frequency is generated which results in even larger voltage spikes.

There are times that shielded isolation transformers and suppression/filtering devices are combined in the field in an attempt to provide the quality power desired; the limitations mentioned above apply also to such a combination. Also, conventional voltage regulation devices cannot be used for the purpose desired. Electronic-controlled tap-switching voltage regulators are undesirable because tap changes during exposure cannot be tolerated. Saturable-core ferroresonant transformers have very high impedance and slow reaction time. They interact with a pulsed load by creating large voltage transients.

In M. G. Say 'Alternating Current Machines', 1983, on pages 136 to 141 the thermal effects with respect to the operation of transformers are discussed. There it is stated that a transformer can sustain intermittent loads requiring an instantaneous power in excess of the nominal (steady state) power rating of the transformer for limited periods of time provided that the temperature limitations are not exceeded. The corresponding considerations, however, are dealing with sizing transformers feeding low duty cycle loads based on hot spot temperature only. Accordingly, it is taught to size the transformers based on thermal considerations, and the disclosure relates to a standard transformer obeying all of the standard rules and is concerned overridingly with temperature. The only subject matter discussed are the temperature related aspects of transformers.

Further, EP-A-0 151 729 discloses a high-voltage transformer for X-ray generators which is designed to be operated at high frequencies (5 to 15 kHz) to reduce its size. A transformer of that type, however, develops a great amount of heat and, accordingly, special means and method are required and provided to effectively deduct that heat.

It is an object of this invention to provide a transformer based type of power conditioner designed to supply a system having relatively high peak pulsed power requirements, such as 150 KVA, with a low source impedance and a relatively small size.

According to the invention, the said object is achieved by means of an apparatus defined in the claim 1; advantageous further development of the invention are indicated in the subclaims.

Specifically, this invention provides an apparatus for providing conditioned electrical power to a load having an instantaneous power requirement greater than 10 KVA and a duty cycle of less than fifty percent, said apparatus comprising a transformer having input means connectable to a source of electrical power and output means connected to the load, said transformer having a steady state power rating of no more than one-half of the maximum instantaneous power requirement of the load and wherein said transformer comprises interleaved closely adjacent layers of primary and secondary windings to provide a low impedance of said transformer such that the instantaneous voltage drop when the load is applied to the output of said transformer ranges from 0.1 to 10 percent.

A transformer based power conditioner according to this invention operates at line frequency (50/60 Hz) and is sized based on impedance, not heat. Accordingly, the conditioning apparatus according to the invention is designed only to meet the impedance requirements of the load, independent of temperature considerations.

A power conditioner according to the invention also differs from conventional power conditioners with regard to its sizing and breakering. When considering how the low transformer impedance interacts with the high current/low duty cycle nature of the load, a much smaller power conditioner can be employed. The main input/output breakers must be sized to meet NEC requirements, and those breaker sizes would normally be too large for the deliberately undersized low impedance transformer's steady state power rating. The system would be expected to burn up if if were overloaded to the extent allowed by the breakers. Therefore, in further development of the invention overload protection means may be selectively coupled to one of the power input and output connection means. Such overload protection means may comprise a thermal switch configured to switch the power from said transformer when a predetermined temperature of said transformer is reached, or they may comprise a non-thermal overload sensor based on current over a predetermined time period. A shunt-trip input breaker or other means can also be used with a thermal sensor which shuts off input power if the transformer temperature increases beyond a threshold level.

An example for a known power conditioner is given in the above cited General Electric's paper Advantx System Facility Power and Ground Requirements for its X-ray equipment. Whereas the continuous power demand is 20 kVA, the peak is 175 kVA. Further, the minimum size of the distribution transformer is 225 kVA (continuous duty), which is even greater than the peak power requirement (maximum demand) but is necessary to achieve the needed low impedance power feed. That transformer would be very large and noisy and would generate significant amounts of heat. In that connection, it is to be noted that oversizing of the power input transformer, circuit breakers and conductors is standard in this industry. Another transformer suitable for powering the particular Advantx 125 unit for 225 kVA measures 120 x 95 x 63 cm.

Designing a power conditioner with a transformer based on impedance leads to several advantageous attributes. The main attribute is that it is much smaller than the standard transformer. There are several benefits resulting directly from the greatly reduced size. One is cost. Another is the reduced generation of heat.

A significant aspect of a transformer used in an apparatus according to the invention is its reduced impedance. For the said purpose, in addition to using the interleaving technique coupled with multiple primary/secondary layers minimum spacing between windings may be employed by tightly winding. Further high performance iron cores and also toroidal transformers may be employed.

Further, the invention offers the possibility to feed power to control electronics. Such control electronics normally have different impedance requirements than the X-ray generator, making variable impedance outputs desirable. Therefore, in further development of the invention second output means for supplying output power from the transformer may be provided which has an impedance which is measurably higher than the low impedance power supplied to the load. Said second output means may comprise auxiliary secondary winding means wound and mounted to the transformer so as to provide higher impedance power. Said auxiliary secondary winding means may comprise at least two secondary windings wound in an electrically bucking arrangement on the core of the transformer so that the output of the auxiliary windings may have a voltage level similar to that of the low impedance output power but a higher impedance or they may comprise a coil winding which is mounted physically asymmetrically with respect to the transformer primary and with respect to the low impedance transformer secondary.

### Brief Description of Drawing

The objects, advantages and features of this invention will be more readily appreciated from the following detailed description, when read in conjunction with the accompanying drawing, in which:
Fig. 1 is a perspective view of a typical load and a power distribution unit enclosure which contains the power conditioner circuit of the invention;
Fig. 2 is a schematic representation of the power conditioner of the invention, including various alternative components, showing how it would be connected to a sensitive electrical load;
Fig. 3 is a partial schematic showing how an input coil of the transformer in Fig. 2 can be modified to produce both a low impedance and a higher impedance output;
Fig. 4 is a partial sectional view showing asymmetrical coil windings for the transformer of Figs. 2 or 3; and
Fig. 5 is a perspective view similar to Fig. 1, showing the low and higher impedance outputs applied to respective loads.

### Best Modes for Carrying Out the Invention

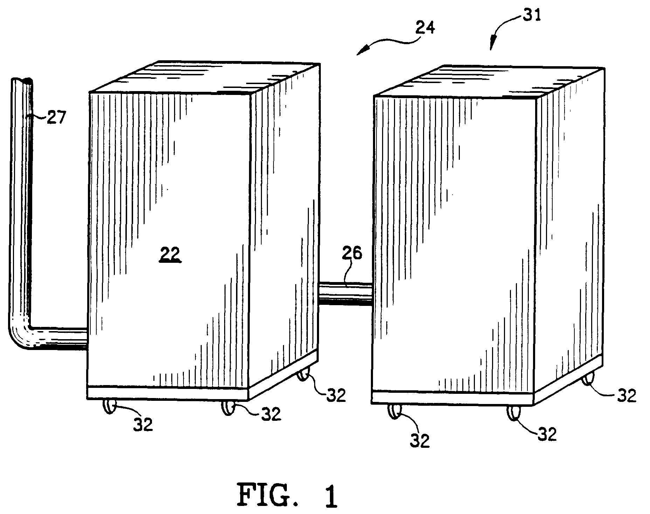

With reference now to the drawing, and more particularly to Fig. 1 thereof, there is shown cabinet 22 which houses the transformer circuit of the invention. Auxiliary circuits may also be contained within the enclosure. Incoming power enters the system through line 27. Output line 26 supplies conditioned power to the equipment, load 31, with which the power distribution unit is used. Cabinet 22 in which the power distribution unit is contained, and the powered equipment represented by enclosure 31, are preferably equipped with wheels and levelers 32 of standard configuration.

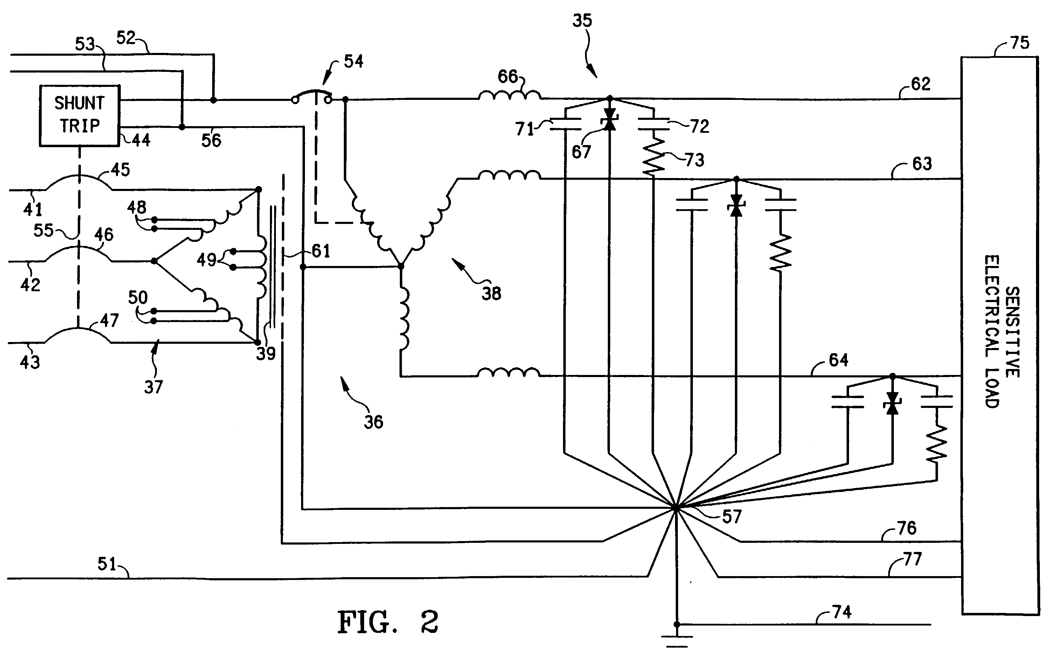

Turning now to Fig. 2, there is shown power conditioning circuit 35 comprised partially of isolation transformer 36 formed of primary 37, secondary 38 and iron core 39. The input to primary 37 is comprised of input phase conductors 41, 42 and 43, each being subject to being disconnected by slow-blow circuit breaking elements 45, 46 and 47 in lines 41, 42, and 43, respectively. The circuit breaking elements are equipped with shunt trip control 44. Line 51 is the input ground line and is the legal minimum in size in accordance with NEC standards. Lines 52 and 53 are connected to contacts for external emergency power off (EPO) control, a conventional requirement for such power supply systems. The transformer is equipped with taps 48, 49 and 50 off the primary windings. This enables the transformer to correct for chronic low or high line voltage by connecting the input phase conductors to the appropriate respective taps.

Thermal switch 54 provides over temperature protection of the power conditioner circuit. This switch is normally open when the circuit is operating. However, should the transformer overheat to a temperature at which the thermal switch is sensitive, the thermal switch will close, shutting off power, thereby preventing overheating. Thermally activated switch 54 may be a bimetallic device as indicated in Fig. 2 or it may be any thermally sensitive device which functions in the desired manner, switching input or output power. There are a variety of thermal or other interrupt methods in addition to the shunt-trip input breaker. For example, the breaker could be on the output. A breaker could be used which is directly sensitive to ambient temperature which would rise from the heat of an overloaded transformer. There are other possible non-thermal methods which could be used for detecting long term overloads.

Note that shunt-trip device 44 controls the circuit breaker. Dashed line 55 indicates a mechanical means for opening circuit breaking elements 45, 46 and 47. In an overheat situation thermal switch 54 and circuit breaker 44 operate together to remove input voltage.

The fact that transformer 36 could be a shielded isolation transformer is indicated by dashed line 61 representing a metal sheet positioned between the primary and secondary windings of the transformer.

Each output line 62, 63 and 64 of transformer secondary 38 includes L-R-C filters with surge suppression. For example, in line 62 is coil or inductance 66, either as a separate component or as the leakage inductance of transformer 36. Surge suppressor 67 could be a metal oxide varistor or a silicon avalanche diode which is connected in parallel with power line 62 to system ground 57. Capacitor 71 is also connected between power line 62 and system ground as is the combination of capacitor 72 and resistor 73, which are connected in parallel with the surge suppressor and with capacitor 71. A similar filter and surge suppression structure is connected in power lines 63 and 64 and need not be discussed in detail here.

Ground line 74 is provided for supplemental ground if necessary, as may be required in some instances.

Sensitive electrical load 75 is the type of system discussed previously, which may be an X-ray machine, magnetic resonance imaging system or other system requiring high power for short durations. Output phase conductors 62, 63 and 64 are relatively large and quite short which provides higher power quality by minimizing impedance and pickup of radiated electrical noise. Lines 76 and 77 are oversized derived neutral and ground.

Transformer 36 has a steady state power rating many times lower than the maximum power required by the load. For example, if the load requires short duration pulses of 150KVA, transformer 36 is designed to be undersized by a factor of at least two to one so that its steady state rating would actually be 75KVA or less. In actuality, the transformer steady state rating would most likely be in the range of 33-17% of the load's peak power so it could range from 50KVA down to 25KVA. This enables the low impedance transformer to be much smaller than a full sized conventional transformer which is larger, more expensive, hotter and acoustically noisier. The full rated transformers of the prior art, which have been used in the past for powering these types of systems, must usually be located outside of the electronic equipment room. By locating the transformer outside the room, other difficulties were created. One requirement for the medical systems mentioned above are that the main circuit breaker must be inside the room. With the old type of transformers located outside the room, additional expenses were necessitated by field mounting the breakers at a distance from the transformer.

The system of the invention is designed to work with pulse loads which may have durations ranging between one millisecond and three seconds. Slow-blow breakers of the type shown in Fig. 2 typically will not trip in less than three seconds at an overload of up to 500 percent.

By combining breakers of a size required by NEC standards (nominally too large for the steady state transformer rating) with some sort of power interrupt system together with the thermal shunt switch, the transformer can be greatly undersized for short duration pulse load requirements with a host of advantages stemming therefrom. These advantages are enumerated hereinbelow. One of them is that if the power conditioner circuit of Fig. 2 were accidentally connected to a high level steady load it would shut down before any damage could be done to the circuit. Thus it is self protecting for its intended purpose.

With respect to transformer 36 itself, one means of reducing the impedance while employing predetermined primary and secondary windings and core elements, is to interleave the primary and secondary windings. With three layers of each primary and secondary interleaved, the impedance of the transformer can be lowered to a fraction of what it would otherwise be. This technique lowers the impedance by a factor of approximately the square of the number of layers, at least when there are two or three layers. Toroidal transformers with bifilar windings of primary and secondary can also be used to lower transformer impedance.

Conventional transformers tend to create a substantial amount of resistive heating, so spaces between windings are necessary for cooling circulation. By contrast, the transformer of this invention is tightly wound, with no spacers, thereby reducing impedance.

The core of the transformer employs high permeability iron elements which are made of mechanically precise, thin sheets so that they stack with minimum air gaps. Additionally, the sheets are stacked in a one-on-one pattern instead of, for example, three-on-three, which tends to increase air gaps. The high permeability iron core employs grain oriented iron, whereas many other power transformers use lower grade non-grain oriented iron sheets.

There are many advantages to the power conditioning circuit of this invention. This power conditioner provides cleaner power than any known approach, no matter the size or rating of the transformers. The circuit of Fig. 2 attenuates incoming or line-side disturbances with the transformer's leakage inductance, the transformer shield, the L-R-C voltage filters and the surge suppressors installed within inches of the output phase conductors, in direct contrast with the long distances typical of prior systems.

By having a smaller system doing the same job, all of it can be put into a single cabinet, as shown in Fig. 1, and thereby all of the system elements, including breakers and surge suppressors, to name a few, can be located within a very short distance of each other and the load. This results in cleaner power and lower installation costs.

Output, or load generated, disturbances are also attenuated by the low transformer impedance and output filters. This helps decouple various connected loads. The low impedance neutral-ground bond eliminates incoming ground noise and attenuates load-generated common mode noise.

Another major advantage of the system of the invention is lower installation costs. The main breaker is installed in a modular manner with the shunt-trip control, and the distribution breaker is in the same modular enclosure of Fig. 1 rather than having a number of major component installations at various locations inside and outside of the room in which the load resides.

The smaller size provided by this system, including the spacing required, for example, for the breakers, which is smaller because it is part of a packaged system rather than being composed of individual, field-installed components, is advantageous for the reasons stated. Because of the smaller size, less heat is generated, thereby permitted a tighter shrouding or a more closely fitting enclosure.

All of the above advantages result in lower installed costs. Because of the combined modular construction, the parts themselves cost less and the system costs less than the sum of a piece-parts installation. This also results in lower labor costs because there are fewer components to be installed and less material needed to complete the installation. Installations are simpler and easier, thereby being faster. Because of the single packaging configuration of the power distribution unit, the time needed for properly locating the entire unit, which previously was in multiple components, is significantly reduced. Finally, reduced heat output reduces the need for special cooling.

The above advantages increase the system's compatibility with personnel areas. A smaller footprint allows installation as part of the electronic system, close to the load, rather than being in a separate room or outside the building. As stated previously, the downsizing of the transformer results in reduced audio sound levels, thereby being much less likely to be objectionable. The reduced heat output allows the use of aesthetically pleasing packaging which result in low heat output that could be bothersome to equipment operators and users in the area.

Until now, low transformer impedance for pulse power applications has been achieved only by oversizing the transformer relative to the peak load. In order to satisfy the requirement that the voltage drop during exposure be in the range of eight percent or less, it was also thought to be necessary to employ a large transformer. And yet, with this invention, which incorporates an undersized transformer as stated, the voltage drop on applying the load is normally within four percent, staying within the range of 0.1 to 10 percent. The "common knowledge" of the industry has been that a low source impedance cannot be combined in a small system size to supply a load whose peak power requirement can range from 10KVA to as high as 500KVA. This invention shows that this "common knowledge" is not the final word.

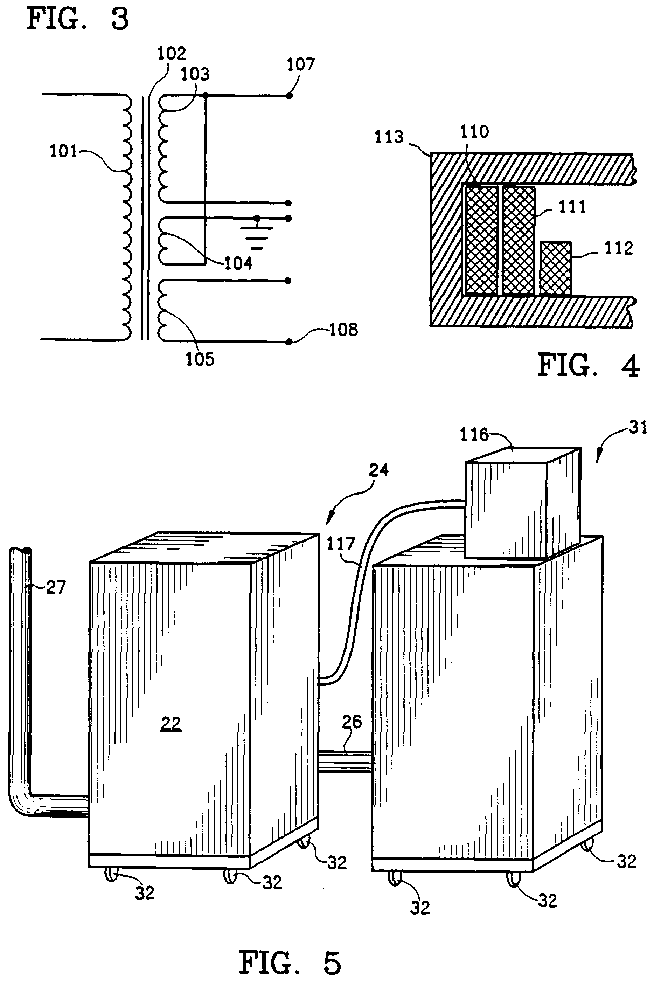

All of the above discussion applies to the basic power conditioning system of Fig. 2, and also to the alternative embodiments of Figs. 3 and 4. The purpose of these embodiments is to provide the same low impedance power for low duty cycle loads, and at the same time, from the same transformer, provide measurably higher impedance power to power the control electronics typically associated with the low duty cycle pulsed high current loads. The control electronics have a relatively small but constant current requirement. To maximize reliability of these control electronics it is desirable to power them from the same source as the working loads they control. By powering both types of load from the same source, disadvantageous ground potential differences are avoided. Ideally, they would be powered from the same ultra-low impedance transformer as the working loads, either from the same, or a separate secondary winding. Attempts to power the control electronics in this way with current technology creates problems, such as:
1. Insufficient leakage inductance and resistance exists to allow the higher levels of L-C filtering desirable for the control electronics loads (lower capacitance and Q of the circuit).
2. Isolation between (or decoupling of) these two loads is desirable so that the intermittent operation of the working load does not create voltage changes so great as to disrupt operation of the control electronics. Even a conventional separate secondary winding becomes tightly coupled to the main secondary winding feeding the working load.

To address these problems in the past it has been known to use a completely separate higher impedance transformer to power the control electronics. However, that approach was costly, took up space and created heat. If good coupling was not required, inductance was added back in with separate inductors, which also added to cost, took up space and created heat.

The embodiment of Fig. 3 allows the power transformer of Fig. 2 to have multiple outputs with differing impedances and enhanced decoupling. Primary winding 101 is equivalent to one of the windings of primary 37 of transformer 36 of Fig 2. Primary 101 is magnetically coupled through iron core 102 (core 39 in Fig. 2) to secondary windings 103, 104 and 105. Secondary 103 is the ultra-low impedance winding (equivalent to one of those in secondary 38 in Fig. 2) feeding the working load through output line 107. This arrangement could be applied to one, two or all three windings of transformer 36.

Separate or auxiliary secondary windings are used to "buck" other windings (or windings can be "self-bucking") so that overall there are more turns for a given output voltage. This increases leakage inductance between primary and secondary windings, as well as increasing resistance, without necessarily boosting output voltage. In Fig. 3, secondary winding 104 is connected so that it raises voltage above that on line 107 or winding 105, and then, with the "bucking" arrangement, the combination of windings 104 and 105 reduces the output voltage on output line 108 to a lower level but with increased impedance. A particular lower level, such as equaling that on line 107, can be achieved by the number of turns in these windings and the manner in which they are connected and wound. It is possible that windings 104 and 105 could be comprised of a single continuous winding with direction reversal. In this example, output lines 107 and 108 can have the same voltage but very different leakage inductances. This satisfies the requirement, in some systems, for the same output voltages but with different impedances.

An alternative scheme for achieving multiple outputs with different impedances from the same transformer is shown in Fig. 4. The technique used here is asymmetrical coil winding on the same transformer core. In this figure, main secondary winding 110 is wound onto iron core 113 with primary winding 111 on top of the main secondary. Auxiliary secondary winding 112 is wound onto the core and over primary winding 111 but it covers only a portion of the width of the primary. Because of this partial width, the leakage inductance of secondary 112 is greater than that of primary winding 111, even though it has the same number of turns as the primary. This indicates that the size of the wires comprising secondary 112 is less than the size of the primary winding wires. Further, the leakage inductance between secondary windings 110 and 112 is greater than it would be if winding 112 was a full width winding and directly adjacent to winding 110.

Thus it can be seen that the transformer of Fig. 2 can be employed to supply equal (or different) voltages at different impedances by two alternative techniques. The higher impedance may range from 1.5 times the lower impedance, to two orders of magnitude larger. For example, for a voltage regulation of 2% at 300 amps, the low impedance output for the main load may be 0.01 ohms at 60 Hz. In this case the high impedance might be 0.1 ohms.

The manner of arranging the windings has been discussed with respect to Fig. 3. The asymmetrical coil winding (for example, partial width) geometry of Fig. 4 can also be used to increase leakage inductance between both primary and secondary and between multiple secondaries.

The secondary windings of Figs. 3 and 4 are sufficiently decoupled so that when peak power is demanded by load 75, the voltage of the higher impedance power may drop by only about 3%, well within tolerance, even for computers. This is due to the fact that when low impedance secondary winding 110 supplies peak current to main load 31, the input voltage across primary winding 111 does not drop as much as does output voltage 107. Higher impedance secondary winding 112 then produces a smaller voltage drop than main secondary winding 110.

Fig. 5 is provided merely to show how the embodiments of Figs. 3 and 4 compare with Fig. 1. The control electronics are represented by box 116 and smaller cable 117 supplies power from the transformer in cabinet 22, to electronics 116, as compared with cable 26 which supplies power to the load in enclosure 31.

For purposes of simplification, Figs. 3 and 4 show only one phase of what could be up to a three phase system. Other phases, could be identical to that shown, but they need not be. Note that the other components of the Fig. 2 circuit are not shown in Fig. 3 but those needed would be included as discussed with respect to Fig. 1.

## Claims

1. An apparatus for providing conditioned electrical power to a load (75) having an instantaneous power requirement greater than 10 KVA and a duty cycle of less than fifty percent, the apparatus comprising a transformer (36) having input means (41, 42, 43) connectable to a source of electrical power and output means (62, 63, 64) connected to the load (75), said transformer (36) having a steady state power rating of no more than one-half of the maximum instantaneous power requirement of the load (75) and wherein said transformer (36) comprises interleaved closely adjacent layers of primary (37) and secondary (38) windings to provide a low impedance of said transformer (36) such that the instantaneous voltage drop when the load (75) is applied to the output of said transformer (36) ranges from 0.1 to 10 percent.

2. The apparatus of claim 1, further comprising overload protection means (44, 45, 46, 47; 54) selectively coupled to one of said power input and output connection means (41, 42, 43 and 62, 63, 64).

3. The apparatus of claim 2, wherein said overload protection means comprises a thermal switch (54) configured to switch the power from said transformer (36) when a predetermined temperature of said transformer (36) is reached.

4. The apparatus of claim 2, wherein said overload protection means comprises a non-thermal overload sensor (44, 45, 46, 47) based on current over a predetermined time period.

5. The apparatus of claim 1, wherein the steady state power rating of said transformer (36) is no more than one-third of the maximum instantaneous power requirement of the load (75).

6. The apparatus of claim 1, wherein said windings (37, 38) of said transformer (36) are tightly wound to further enhance the low impedance characteristics.

7. The apparatus of claim 1, further comprising second output means (104, 105) for supplying output power from said transformer (36) which has an impedance which is measurably higher than the low impedance power supplied to the load (75).

8. The apparatus of claim 7, wherein said second output means comprises auxiliary secondary winding means (104, 105) wound and mounted to said transformer (36) so as to provide the higher impedance power.

9. The apparatus of claim 8, wherein said auxiliary secondary winding means comprises at least two secondary windings (104, 105) wound in an electrically bucking arrangement on the core of said transformer (36) so that the output of said auxiliary windings may have a voltage level similar to that of the low impedance output power but a higher impedance.

10. The apparatus of claim 8, wherein said auxiliary secondary winding means comprises a coil winding (112) which is mounted physically asymmetrically with respect to the transformer primary (111) and with respect to the low impedance transformer secondary (110).

## Patentansprüche

1. Vorrichtung zum Liefern konditionierter elektrischer Leistung an eine Last (75), die einen Leistungsbedarf von mehr als 10 kVA und einen Tastgrad von weniger als 50 % aufweist, wobei die Vorrichtung einen Transformator (36) mit einer mit einer Quelle für elektrische Leistung verbindbaren Eingangsseite (41, 42, 43) und einer mit der Last (75) verbundenen Ausgangsseite (62, 63, 64) besitzt, der Transformator (36) eine Nennleistung im stationären Zustand von nicht mehr als der Hälfte des maximalen momentanen Leistungsbedarfs der Last (75) hat und wobei der Transformator (36) eng benachbarte verschachtelte Lagen von Primär- (37) und Sekundärwicklungen (38) aufweist, um eine niedrige Impedanz des Transformators (36) zu schaffen, so daß der momentane Spannungsabfall bei Anschalten der Last (75) an den Ausgang des Transformators (36) zwischen 0,1 und 10 % liegt.

2. Vorrichtung nach Anspruch 1, die zusätzlich Schutzeinrichtungen (44, 45, 46, 47; 54) gegen Überlastung aufweist, die selektiv mit der Eingangs- oder der Ausgangsseite (41, 42, 43 oder 62, 63, 64) gekoppelt sind.

3. Vorrichtung nach Anspruch 2, wobei die Überlastungsschutzeinrichtung einen Thermoschalter (54) aufweist, der so ausgelegt ist, daß er die Leistung vom Transformator (36) abschaltet, wenn eine vorbestimmte Temperatur des Transformators (36) erreicht ist.

4. Vorrichtung nach Anspruch 2, wobei die Überlastungsschutzeinrichtung einen nicht thermisch arbeitenden Überlastsensor (44, 45, 46, 47), der auf Stromfluß über eine vorbestimmte Zeitdauer basiert.

5. Vorrichtung nach Anspruch 1, wobei die Nennleistung im stationären Zustand des Transformators (36) nicht größer ist als ein Drittel des maximalen momentanen Leistungsbedarfs der Last (75).

6. Vorrichtung nach Anspruch 1, wobei die Wicklungen (37, 38) des Transformators (36) eng gewickelt sind, um die Eigenschaft niedriger Impedanz weiter zu fördern.

7. Vorrichtung nach Anspruch 1, die zusätzlich einen zweiten Ausgang (104, 105) zum Abgeben von Ausgangsleistung aus dem Transformator (36) mit einer Impedanz aufweist, die meßbar größer ist als die Impedanz für die der Last (75) zugeführte Leistung.

8. Vorrichtung nach Anspruch 7, wobei der zweite Ausgang Hilfssekündärwicklungen (104, 105) aufweist, die so gewickelt und angeordnet sind, daß sie die Leistung hoher Impedanz liefern.

9. Vorrichtung nach Anspruch 8, wobei die Hilfssekundärwicklungen wenigstens zwei Sekundärwicklungen (104, 105) aufweisen, die in elektrisch gegensinniger Anordnung auf den Kern des Transformators (36) gewickelt sind, so daß der Ausgang der Hilfswicklungen einen Spannungspegel ähnlich dem der Ausgangsleistung mit niedriger Impedanz aufweisen kann, aber eine höhere Impedanz aufweist.

10. Vorrichtung nach Anspruch 8, wobei die Hilfssekundärwicklungen eine Spulenwicklung (112) aufweisen, die physikalisch asymmetrisch in Bezug auf die Transformatorprimärwicklung (111) und in Bezug auf die Transformatorsekundärwicklung (110) niedriger Impedanz angeordnet ist.

## Revendications

1. Appareil pour fournir une puissance électrique conditionnée à une charge (75) qui a une puissance instantanée nécessaire supérieure à 10 kVA et un rapport cyclique inférieur à 50 %, l'appareil comprenant un transformateur (36) qui comporte des moyens d'entrée (41, 42, 43) aptes à être reliés à une source de puissance électrique et des moyens de sortie (62, 63, 64) reliés à la charge (75), et dont la puissance nominale en régime permanent ne dépasse pas la moitié de la puissance instantanée nécessaire maximale de la charge (75), et le transformateur (36) comprenant des couches d'enroulements primaire (37) et secondaire (38) très rapprochées et entrelacées afin de fournir une basse impédance du transformateur (36), de sorte que la baisse de tension instantanée qui se produit lorsque la charge (75) est appliquée à la sortie du transformateur (36) va de 0,1 à 10%.

2. Appareil selon la revendication 1, comprenant également des moyens de protection contre les surcharges (44, 45, 46, 47 ; 54) couplés sélectivement à l'un des moyens de liaison d'entrée et de sortie de puissance (41, 42, 43 et 62, 63, 64).

3. Appareil selon la revendication 2, dans lequel les moyens de protection contre les surcharges comprennent un thermorupteur (54) conçu pour commuter la puissance à partir du transformateur (36) lorsqu'une température prédéterminée de celui-ci est atteinte.

4. Appareil selon la revendication 2, dans lequel les moyens de protection contre les surcharges comprennent un détecteur de surcharge non thermique (44, 45, 46, 47) basé sur un courant pendant une durée prédéterminée.

5. Appareil selon la revendication 1, dans lequel la puissance nominale en régime permanent du transformateur (36) ne dépasse pas un tiers de la puissance instantanée nécessaire maximale de la charge (75).

6. Appareil selon la revendication 1, dans lequel les enroulements (37, 38) du transformateur (36) sont enroulés serré afin d'améliorer encore les caractéristiques de basse impédance.

7. Appareil selon la revendication 1, comprenant également des seconds moyens de sortie (104, 105) pour fournir à partir du transformateur (36) une puissance de sortie qui a une impédance supérieure d'une manière mesurable à la puissance à basse impédance fournie à la charge (75).

8. Appareil selon la revendication 7, dans lequel les seconds moyens de sortie comprennent des moyens formant enroulements secondaires auxiliaires (104, 105) enroulés et montés sur le transformateur (36) de manière à fournir la puissance à impédance plus élevée.

9. Appareil selon la revendication 8, dans lequel lesdits moyens formant enroulements secondaires auxiliaires comprennent au moins deux enroulements secondaires (104, 105) enroulés en un dispositif de compensation électrique sur le noyau du transformateur (36) pour que la sortie des enroulements auxiliaires puisse avoir un niveau de tension similaire à celui de la puissance de sortie à basse impédance, mais une impédance plus élevée.

10. Appareil selon la revendication 8, dans lequel lesdits moyens formant enroulements secondaires auxiliaires comprennent un enroulement de bobine (112) qui est monté asymétriquement, physiquement, par rapport au primaire de transformateur (111) et par rapport au secondaire de transformateur à basse impédance (110).
